# EUROPEAN PATENT SPECIFICATION

(11) **EP 3 968 603 B1**
(45) Date of publication and mention of the grant of the patent: **21.08.2024**
(21) Application number: 20195793.3
(22) Date of filing: 11.09.2020
(51) Int. Cl.: H04L 67/12, H04L 9/40, H04W 4/44, H04W 12/02

(54) **CONTROLLING PRIVACY SETTINGS OF A COMMUNICATION BETWEEN A VEHICLE AND A BACKEND CLOUD DEVICE**
STEUERUNG DER DATENSCHUTZEINSTELLUNG EINER KOMMUNIKATION ZWISCHEN EINEM FAHRZEUG UND EINER BACKEND-CLOUD-VORRICHTUNG
CONTRÔLE DE PARAMÈTRES DE CONFIDENTIALITÉ D'UNE COMMUNICATION ENTRE UN VÉHICULE ET UN DISPOSITIF DE NUAGE DORSAL

(43) Date of publication of application: 16.03.2022
(73) Proprietor: VOLKSWAGEN AG, 38440 Wolfsburg (DE)
(72) Inventor: Demann, Tony, 44807 Bochum (DE); Bas, Frederik, 5262 EW Vught (NL); de Bakker, Marco, 6021 ZL Budel (NL)

(56) References cited:
- US-A1- 2018 295 518
- US-A1- 2020 015 049
- US-A1- 2020 092 375
- FERNANDEZ MARIBEL ET AL: "Privacy-Preserving Architecture for Cloud-IoT Platforms", 2019 IEEE INTERNATIONAL CONFERENCE ON WEB SERVICES (ICWS), IEEE, 8 July 2019 (2019-07-08), pages 11 - 19, XP033608284, DOI: 10.1109/ICWS.2019.00015
- BUTT TALAL ASHRAF ET AL: "Privacy Management in Social Internet of Vehicles: Review, Challenges and Blockchain Based Solutions", IEEE ACCESS, vol. 7, 12 June 2019 (2019-06-12), pages 79694 - 79713, XP011732742, DOI: 10.1109/ACCESS.2019.2922236

## Description

The invention is related to a method for controlling of a communication between a vehicle and a backend device in a vehicle-to-cloud-system, executed especially by an online connectivity unit of the vehicle, according to the independent method claim. Further, the invention is related to an electronic control unit according to the independent device claim. Furthermore, the invention is related to a vehicle comprising a corresponding electronic control unit according to the second independent device claim. Moreover, the invention is related to a computer program product for a corresponding method according to the independent product claim.

Vehicle-to-cloud-systems are basically known, for example from DE 10 2015 200 422 A1. Electronic control units in vehicles usually have computing units. However, these computing units are often limited in processing power and storage amount. Also, the access to programming updates or other data is sometimes combined with complications. On the other hand, cloud computers usually provide high computational power, large memory and easy access to updates as well as to other data. Vehicle-to-cloud-systems serve to provide cloud-computing applications in order to enhance vehicle functionalities for increased safety and intelligence as well as environmental and customer friendliness while adding to the comfortable and enjoyable operations. For this aim, electronic control units may send requests for certain applications to be provided within the cloud. Further, in the modern vehicle-to-cloud-systems a synchronization may be provided between the electronic control units and the cloud. However, known systems do not consider different privacy settings and not see the problem of providing of vital mobile online services, when a connectivity unit of the vehicle is switched offline. Some vital operations of the vehicle may be prohibited in an offline modus, so that safety of the vehicle cannot be guaranteed.

FERNANDEZ MARIBEL ET AL: "Privacy-Preserving Architecture for Cloud-loT Platforms", 2019 IEEE INTERNATIONAL CONFERENCE ON WEB SERVICES (ICWS), IEEE, 8 July 2019 (2019-07-08), pages 11-19, XP033608284 discloses a cloud-loT architecture aiming at protecting users' sensitive data by allowing them to control which kind of data is transmitted by their devices.

The aim of the present invention is to provide a method for controlling a communication between a vehicle and a backend device in a vehicle-to-cloud-system, especially from the vehicle side of the system, with improved safety. The aim of the present invention is especially to provide a method for controlling a communication between a vehicle and a backend device in a vehicle-to-cloud-system, which enables to ensure that vital services may be carefully provided, even when a user of the vehicle does not wish to be tracked and switches the connectivity unit off. Also, the aim of the invention is to provide a corresponding electronic control unit for the vehicle, a corresponding vehicle and a related computer program product for the inventive method.

According to the first aspect, embodiments of the invention provide a method for controlling a communication between a vehicle and a backend device in a vehicle-to-cloud-system, with the features of the independent method claim. In embodiments, the method is executed by an online connectivity unit of the vehicle, According to the second aspect, embodiments of the invention provide an electronic control unit with the features of the independent device claim. According to the third aspect, embodiments of the invention provide a vehicle comprising a corresponding electronic control unit with the features of the second independent device claim. According to the fourth aspect, embodiments of the invention provide a computer program product for a corresponding method with the features of the independent product claim. Details and features disclosed on individual aspects of the invention also apply to the other aspects of the invention and vice versa.

According to the first aspect, embodiments of the invention provide a method for controlling a (preferably wireless) communication (over a network, for example a mobile phone network, an internet and/or a wireless computer network) between a vehicle and a backend device (on the cloud side of the system) in a vehicle-to-cloud-system, the method comprising:
- establishing a first list of mobile online services used by vehicle devices and corresponding data types used by the mobile online services,
- establishing a second list of the data types used by the mobile online services and corresponding privacy levels of the data types,
- receiving a request from at least one of the mobile online services to connect the backend device,
- verifying an authorization of the at least one of the mobile online services to connect the backend device upon the request, dependent on:
   - the privacy levels corresponding to the data types used by the at least one of the mobile online services and
   - current privacy settings of the vehicle,
- connect the at least one of the mobile online services and the backend device, if the at least one of the mobile online services is authorized to connect the backend device.

Embodiments of the method may, in particular, be executed by an online connectivity unit of the vehicle.

Embodiments of the method may be carried out in the given order or in a modified order. Individual actions within the method may be carried out simultaneously and/or repeatedly to allow a flowing process.

A backend device within the meaning of the invention is a computer or a group of computers providing a high computational power, a large memory and easy access to updates as well as to other data that may be used in the vehicle. The backend device within the meaning of the invention is the representative of the cloud.

The mobile online services within the meaning of the invention may include safety, intelligence, environmental, comfortable and enjoyable operations.

The at least one vehicle device (using mobile online services) within the meaning of the invention may be a sensor, safety, environment, information, entertainment or comfort device. The vehicle devices may comprise one of the following devices:
- sensor device, such as crash-sensor, velocity sensor, and so on,
- safety device, such as breakdown call, emergency call,
- environment device, such as weather forecast, pollutant load sensor, environmental zone detection unit,
- information device, for example for online traffic information, online destination import, online route import, online POI search, my POIs, petrol stations, parking spaces, vehicle status report, time manager, weather, news and so on,
- entertainment device, for example for streaming services, and/or
- comfort device, such as door closing detectors, light off detectors, parking position detectors, vehicle status and/or condition detector, trip database, user calendar, information call and so on.

For this aim, the vehicle devices may be configured to subscribe to a publish-subscribe messaging environment using different topics provided by various backend devices.

The data types within the meaning of the invention may comprise tracking, location, personal, consent, interest consideration, anonymous and/or special dormant operation data. The dormant operation data may be for example location data, data of an accident sensor and so on.

The privacy levels within the meaning of the invention may comprise different privacy levels from low privacy level, wherein at low privacy level the online connectivity unit is online (a modem is switched on), until high privacy level, wherein at high privacy level the online connectivity unit is not completely offline, but in a listening and/or dormant operation mode (the mode may be switched on for a small period of time, for example 15 seconds, if needed and legally allowed).

The invention recognizes that, when the online connectivity unit of the vehicle is turned off, all mobile online services, comprising security-relevant functions, are not possible, because no information leaves the vehicle and the user cannot be tracked by any means. In such situations, there are certain mobile online services that are legally required (such as emergency call) and therefore cannot be switched off. Nevertheless, for these essential and legally required mobile online services vehicle needs to establish an online connection, when really needed.

Embodiments of the invention provide that only essential and legally required mobile online services inherently receiving an access to the network, even if the online connectivity unit (which may also be called vehicle SIM card) is logged out or switched to a maximum possible privacy mode, and/or when a user manually deactivated all mobile online services in the vehicle.

For this aim, an authorization of at least one of the mobile online services to connect the backend device is verified (upon a request from the at least one of the mobile online services to connect the backend device)), depending on the privacy levels corresponding to the data types used by the at least one of the mobile online services and current privacy settings of the vehicle. If the data types used by the at least one of the mobile online services requesting for a connection to the backend device) comprise so called dormant operation data, the connection may be allowed, even if the current privacy settings of the vehicle are set to a high privacy level, especially to allow a transmission of vital data between the vehicle and the backend device.

In some embodiments, an online connectivity unit connects the at least one of the mobile online services and the backend device, if the at least one of the mobile online services is authorized to connect the backend device.

According to the invention, the at least one of the mobile online services is authorized to connect the backend device, when it uses data types corresponding to at least one privacy level being higher than or equal to the current privacy settings of the vehicle.

In order to connect the at least one of the mobile online services and backend device, if the current privacy settings of the vehicle are set to a high privacy level and the data types used by the at least one of the mobile online services requesting for a connection to the backend device comprise dormant operation data, the online connectivity unit may be switched from a listening and/or dormant operation mode to a sending mode for a short time, for example 15 seconds. In the sending mode the online connectivity unit may switch on a modem, in order to connect the backend device.

In some embodiments, the user wishes for privacy are satisfied, because in a listening and/or dormant operation mode of the online connectivity unit the user cannot be tracked. Dormant operation mode means that the online connectivity unit is not registered in any network, but may be in a sleeping (that is dormant) and/or listening mode. Also, in a listening and/or dormant operation mode the online connectivity unit may keep a list of all networks, for example sorted by a connection quality to quickly connect to the best provider for instance, when an emergency call must be made. Each mobile online service may have only one, a few or all data types, which may be provided within the vehicle-to-cloud-system. Both lists may be stored in a memory unit of an electronic control unit or in the online connectivity unit itself.

In some embodiments, if a mobile online service is tagged as using dormant operation data, then that service may communicate to the cloud, even when the vehicle is offline. When the vehicle goes offline, and a mobile online service still needs to communicate a message to the backend device, then that service may request for connection and the online connectivity unit may verify, if the mobile online service is allowed or not. When the mobile online service is allowed, then the online connectivity unit may request a gateway, such as Message Queuing Telemetry Transport (MQTT), to switch on the modem for that service and to send the message to the backend device. The modem may be online on demand for a short time period, for example 15 seconds.

In some embodiments, the mobile online service does not need to be aware, whether it is special or not (which may communicate, even when the vehicle is offline due to user privacy settings). In this case, when the mobile online service makes a request to communicate a message, the online connectivity unit verifies, whether it is allowed or not. If it is allowed, then it will switch on the modem and forward the message to the gateways.

As a result, all mobile online services may work in a similar way in both online and offline mode of the modem. Each service does not need to implement its own special scenarios. The online connectivity unit may be a central unit, which may verify the authorization and switch on or off the modem. In some embodiments, the online connectivity unit comprises such modem. In other embodiments, the online connectivity unit may be connected to an external modem within the vehicle.

Thus, the privacy settings may be fully considered, wherein the safety in communication by using the vehicle is drastically increased.

Embodiments of the invention enable to ensure that vital services may be carefully provided, even when a modem is switched off, and/or even if a user of the vehicle does not wish to be tracked and switches the connectivity unit off.

According to the invention, if the data types used by the at least one of the mobile online services requesting for a connection to the backend device comprise dormant operation data, the connection will be allowed, even if the current privacy settings of the vehicle are set to a high level of privacy, to allow a transmission of vital data between the vehicle and the backend device. In this way, the invention may reliably serve for improved safety with little computing effort.

In some embodiments, if the current privacy settings of the vehicle are set to a high privacy level and the data types used by the at least one of the mobile online services requesting for a connection to the backend device comprise dormant operation data, the online connectivity unit may be switched from a listening and/or dormant operation mode to a sending mode for a predetermined period of time to allow the at least one of the mobile online services using dormant operation data to connect the backend device. Thus, privacy wishes of a user may be satisfied in a sufficient way and the user does not even notice, that the online connectivity unit was online for that short time frame. In some embodiments, the predetermined time may be set within a predetermined time frame, e.g. a frame between a minimum period of time (e.g. 15 seconds) and a maximum period of time (e.g. 40 seconds).

In some embodiments, a modem of the online connectivity unit, or a modem communicatively coupled to the online connectivity unit, may be switched on in the sending mode of the online connectivity unit to provide a communication between the vehicle and the backend device.

In some embodiments, if the at least one of the mobile online services uses different data types according to the first list, wherein different data types are associated with various privacy levels according to the second list, the authorization to communicate between the at least one of the mobile online services and backend device will be verified according to the highest privacy level of the various privacy levels corresponding to the different data types used by the at least one of the mobile online services. Thus, the at least one of the mobile online services may be authorized to connect the backend device, when it uses data types corresponding to at least one privacy level lying over or being equal to the current privacy settings of the vehicle.

Within the meaning of the invention, the privacy levels may comprise at least two, preferably seven, different levels of privacy, between:
- a low privacy level, wherein at low privacy level the online connectivity unit is in a sending mode,
- and/or a high privacy level, wherein at high privacy level the online connectivity unit is in a listening and/or dormant operation mode. At levels lying under the high privacy level, the online connectivity unit may be in a sending mode, but still, only authorized mobile online services will be connected to the backend device, which use data types having at least one privacy level lying over or being equal to the current privacy settings of the vehicle. Different privacy settings enable more flexibility and/or accuracy and facilitate a differentiated and/or individual treatment of different mobile online services according to the different privacy settings.

In some embodiments, the data types may comprise, especially at least two, preferably seven, different data types comprising at least one of the following data types:
- tracking data,
- location data,
- personal data,
- consent data,
- interest consideration data,
- anonymous data,
- and/or dormant operation data.

In such a way, differentiated and individual treatment of different data types may be provided.

In some embodiments, if the current privacy settings of the vehicle are set to a high privacy level and/or if the online connectivity unit is switched to a listening and/or dormant operation mode, a third list of evaluable networks will be established, especially by the online connectivity unit of the vehicle, wherein especially the third list of the evaluable networks will be analyzed by a connection quality of the evaluable networks. Thus, an immediate emergency call be provided, if need, for example in case of an accident. Thus, the safety of the vehicle may be increased in a remarkable way.

In some embodiments, establishing the first list and the second list is executed at least once after:
- a first commissioning of the vehicle,
- a technical inspection,
- a system update,
- a change of a user of the vehicle, and/or
- a user request.

Thus, preferable triggers may be provided for establishing the first list and the second list.

In some embodiments, verifying the authorization of the at least one of the mobile online services (MOD) and connecting the at least one of the mobile online services (MOD) are executed solely after receiving a request from at least one of the mobile online services to connect the backend device in step 3). Thus, the electric power for listening and/or dormant mode may be saved.

In some embodiments, the method is solely executed, if the current privacy settings of the vehicle are set to a high privacy level and/or if the online connectivity unit is switched to a listening and/or dormant operation mode, and/or the communication between a vehicle and a backend device is allowed for all mobile online services, if the current privacy settings of the vehicle are set to a law privacy level. Thus, the electric power for operating the online connectivity unit may be reduced.

In some embodiments, the privacy settings of the vehicle are determined manually by a user of the vehicle especially by operating an input device of the vehicle, preferably a display device at a vehicle dashboard. Thus, user wishes for privacy may be directly considered.

In some embodiments, the privacy settings of the vehicle are determined automatically by an electronic control unit of the vehicle. In this case, a confirmation and/or adjustment possibility of the privacy settings of the vehicle automatically determined by an electronic control unit of the vehicle may be provided for a user of the vehicle, especially by operating an input device of the vehicle, preferably a display device at a vehicle dashboard. The electronic control unit of the vehicle may preferably able to study user wishes and/or settings in typical situations, so that the electronic control unit may suggest the privacy settings automatically. Then, the user only needs to confirm and/or adjust the automatically determined privacy settings. The user comfort may then be increased in a reliable manner.

According to the second aspect, embodiments of the invention provide an electronic control unit comprising: a memory, in which a program code is stored, and a computing unit, wherein when carrying out the program code by the computing unit, a method is performed as described above. With embodiments of such electronic control unit the same advantages may be achieved as with corresponding embodiments of the method described above. Full reference is made to these advantages in the present case.

Embodiments of the invention provide, according to the third aspect, a vehicle comprising an corresponding electronic control unit. With embodiments of such vehicle the same advantages may be achieved as with corresponding embodiments of the method described above. Full reference is made to these advantages in the present case.

Another advantage of the invention may be achieved by providing a corresponding vehicle-to-cloud-system.

According to the fourth aspect, the invention provides a computer program product comprising a program code for carrying out a method as described above. In other words, the computer program product comprises instructions which, when the program is executed by a computer, cause the computer to carry out embodiments of the method described above. With embodiments of such computer program product the same advantages may be achieved as with corresponding embodiments of the method described above. Full reference is made to these advantages in the present case.

The invention and its further developments as well as its advantages will be explained in more detail below using figures. The figures show schematically:
- Fig. 1: a schematic design of a vehicle-to-cloud-system within the meaning of the invention,
- Fig. 2: schematic first and second lists within the meaning to the invention, and
- Fig. 3: a schematic third list within the meaning to the invention.

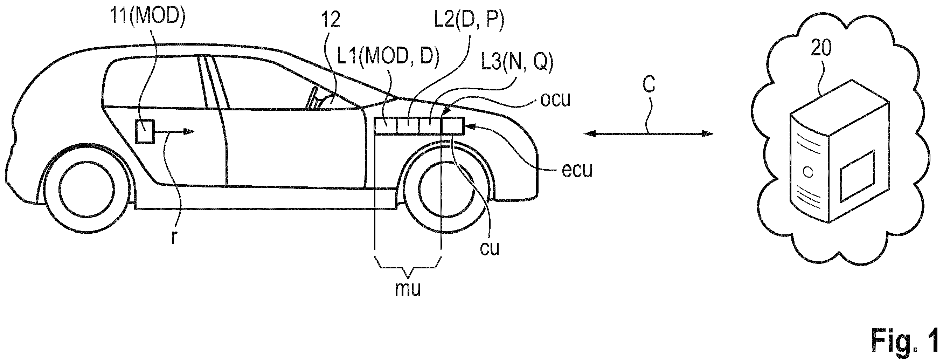

Figure 1 shows a vehicle-to-cloud-system 100. The vehicle-to-cloud-system 100 may have at least one vehicle 10 and a backend device 20 within the cloud. The vehicle 10 may have an electronic control unit ecu. To increase the functionality of the vehicle 10 the backend device 20 may provide high computational power, large memory and easy access to updates as well as to another data. Thus, cloud-computing applications may enhance vehicle functionalities, for example for more safety, intelligence, environmental and customer-friendly and comfortable operations as well as enjoyable operations. For this aim, the electronic control unit ecu may send requests for certain applications to be provided by the backend device 20. Also a synchronization may be provided between the electronic control unit ecu and the backend device 20.

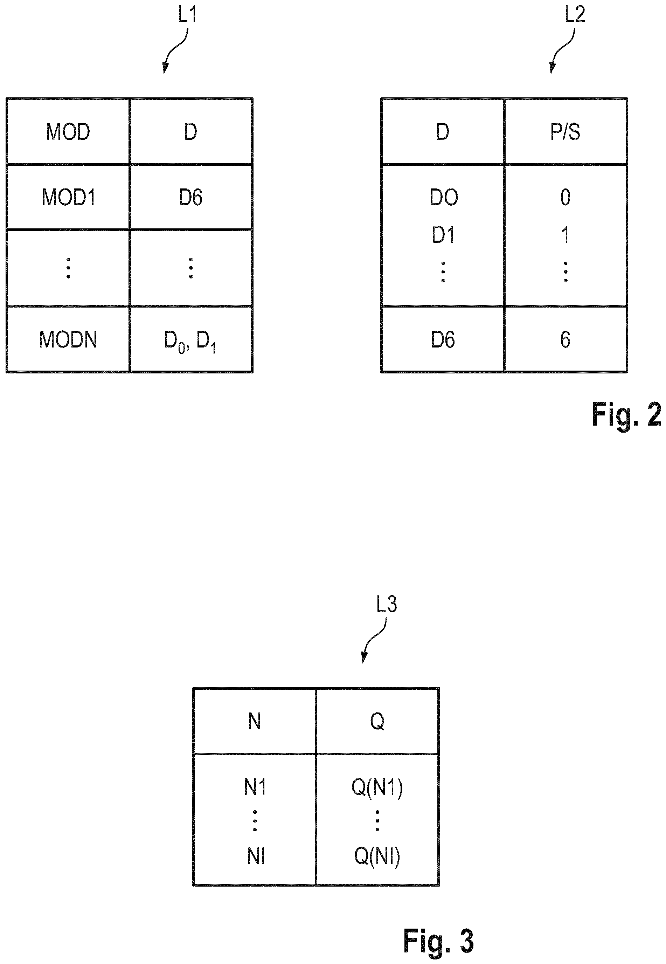

Figures 1 and 2 serves for explanation of a method for controlling a (preferably wireless) communication C (over a network, for example a mobile phone network, an internet and/or a wireless computer network) between a vehicle 10 and a backend device 20 (representative of a cloud) in a vehicle-to-cloud-system 100. The method is especially executed by an online connectivity unit ocu of the vehicle 10. The method comprises:
- establishing a first list L1 of mobile online services MOD used by vehicle devices 11 and corresponding data types D used by the mobile online services MOD;
- establishing a second list L2 of the data types D used by the mobile online services MOD and corresponding privacy levels P of the data types D;
- waiting of a request r from at least one of the mobile online services MOD to connect the backend device 20;
- verifying an authorization of the at least one of the mobile online services MOD to connect the backend device 20 upon the request r, depending on:
   - the privacy levels P corresponding to the data types D used by the at least one of the mobile online services MOD and
   - current privacy settings S of the vehicle 10,
- connecting the at least one of the mobile online services MOD and the backend device 20, if the at least one of the mobile online services MOD is authorized to connect the backend device 20.

The aim of the invention is to treat critical situations with more safety, when the online connectivity unit ocu of the vehicle 10 is turned off and all mobile online services MOD, also comprising security-relevant functions (such as an emergency call), are not possible, because no information leaves the vehicle 10.

Embodiments of the invention provide that only essential and legally required mobile online services MOD inherently receiving an access to the network, even if the online connectivity unit ocu is switched to a maximum possible privacy mode.

A verification of an authorization of at least one of the mobile online services MOD to connect the backend device 20, if requested, is provided.

The verification is made dependent on the privacy levels P corresponding to the data types D used by the at least one of the mobile online services MOD asking for a connection and current privacy settings S of the vehicle 10.

If the data types D used by the at least one of the mobile online services MOD requesting for a connection to the backend device 20 comprise so called dormant operation data D6, the connection may be allowed, even if the current privacy settings S of the vehicle 10 are set to a high privacy level 6, especially to allow a transmission of vital data between the vehicle 10 and the backend device 20.

The online connectivity unit ocu connects the at least one of the mobile online services MOD and the backend device 20, if the at least one of the mobile online services MOD is authorized to connect the backend device 20.

The at least one of the mobile online services MOD is authorized to connect the backend device 20, if it uses data types D corresponding to at least one privacy level P being greater than (i.e. higher privacy level) or being equal to the current privacy settings S of the vehicle 10.

To connect the at least one of the mobile online services MOD and backend device 20, if the current privacy settings S of the vehicle 10 are set to a high privacy level 6 and the data types D used by the at least one of the mobile online services MOD requesting for a connection to the backend device 20 comprise dormant operation data D6, the online connectivity unit ocu may be switched from a listening and/or dormant operation mode to a sending mode for a short time, for example 15 seconds. In the sending mode the online connectivity unit ocu may switch on a modem, in order to connect the backend device 20.

The privacy settings S of the vehicle 10 may be determined manually by a user of the vehicle 10 especially by operating an input device of the vehicle 10, preferably a display device at a vehicle dashboard 12.

Besides of this, the privacy settings S of the vehicle 10 may be determined automatically by an electronic control unit ecu of the vehicle 10. In this case, a confirmation and/or adjustment possibility of the privacy settings S of the vehicle 10 automatically determined by an electronic control unit ecu of the vehicle 10 may be provided for a user of the vehicle 10, especially by operating an input device of the vehicle 10, preferably a display device at a vehicle dashboard 12. The electronic control unit ecu of the vehicle 10 may preferably able to study user wishes and/or typical settings like an artificial intelligence, so that the electronic control unit ecu may suggest the privacy settings S automatically.

In a listening and/or dormant operation mode of the online connectivity unit ocu the user cannot be tracked. Dormant operation mode means that the online connectivity unit ocu is not registered in any network, but may be in a sleeping (that is dormant) and/or listening mode.

Also, in a listening and/or dormant operation mode the online connectivity unit ocu may keep a third list L3 of all evaluable networks N shown in figure 3, for example sorted by a connection quality Q to quickly connect to the best provider for instance, when an emergency call must be made.

As figure 2 indicates, each mobile online service MOD may have only one, a few or all data types D0 to D6. As figure 1 indicates, both lists (i.e. list of mobile online services MOD and list of data types D) may be stored in a memory unit mu of an electronic control unit ecu or in the online connectivity unit ocu itself.

If a mobile online service MOD is tagged as using dormant operation data D6, then that service MOD may communicate to the backend device 20, even when the vehicle 10 is offline. When the vehicle 10 goes offline, but at least one of the mobile online services MOD needs to communicate a message to the backend device 20, the service MOD may request for connection and the online connectivity unit ocu may verify, if the mobile online service MOD is authorized or not. If the mobile online service MOD is allowed, then the online connectivity unit ocu may request a gateway, such as MQTT, to switch on a modem for the service MOD and to send the message to the backend device 20. The modem may be online on demand for a short time period, for example 15 seconds.

Advantageously, the mobile online service MOD does not need to be aware, whether it is special or not (which may communicate, even when the vehicle 10 is offline due to user privacy settings S). The invention has the advantage that all mobile online services MOD will work in a similar way in both - online and offline mode - of the vehicle 10. Each service MOD does not need to implement its own special scenarios. According to the invention, the online connectivity unit ocu is a central unit, which may verify the authorization and switch on or off the modem.

With the help of the invention, the privacy settings S may be fully considered, wherein the safety in communication C by using the vehicle 10 is drastically increased.

Embodiments of the invention enable to ensure that vital services may be carefully provided, even when a modem is switched off, and/or even if a user of the vehicle 10 does not wish to be tracked and switches the connectivity unit off.

The different privacy levels 0, 1, 2, 3, 4, 5, 6 may comprise at least two or more levels, between:
- a low privacy level 0, wherein at low privacy level 0 the online connectivity unit ocu is in a sending mode,
- and/or a high privacy level 6, wherein at high privacy level 6 the online connectivity unit ocu is in a listening and/or dormant operation mode.

At levels 0 to 5 lying under the high privacy level 6, the online connectivity unit ocu may be in a sending mode, but still, only authorized mobile online services will be connected to the backend device 20, which use data types D having at least one privacy level P lying over or being equal to the current privacy settings S of the vehicle 10.

The current privacy settings S of the vehicle 10 may be set according to the available levels 0, 1, 2, 3, 4, 5, 6. The user may for example choose one of the available levels 0, 1, 2, 3, 4, 5, 6.

Further figure 2 shows that the data types D may comprise at least two or more different data types D comprising at least one of the following data types D:
- tracking data D0,
- location data D1,
- personal data D2,
- consent data D3,
- interest consideration data D4,
- anonymous data D5, and/or
- dormant operation data D6.

Establishing the lists may be executed at least once after:
- a first commissioning of the vehicle 10,
- a technical inspection,
- a system update,
- a change of a user of the vehicle 10, and/or
- a user request.

In some embodiments, verifying the authorization of the at least one of the mobile online services (MOD) and connecting the at least one of the mobile online services (MOD) are executed solely after receiving a request r from at least one of the mobile online services MOD to connect the backend device 20.

In some embodiments, the method is solely executed, if the current privacy settings S of the vehicle 10 are set to a high privacy level 6 and/or if the online connectivity unit ocu is switched to a listening and/or dormant operation mode.

In some embodiments, the communication C between a vehicle 10 and a backend device 20 is allowed for all mobile online services MOD, if the current privacy settings S of the vehicle 10 are set to a low privacy level 0. In this case, the mobile online services MOD do not need to ask for connection. In this case, the method does not need to be executed.

An electronic control unit ecu comprising: a memory unit mu, in which a program code is stored, and a computing unit cu, wherein when carrying out the program code by the computing unit cu, a method is performed as described above, provides the second aspect of the invention. In other words the electronic control unit ecu is configured in such a way to execute the method as described above.

The memory unit mu may store the lists L1, L2, L3. The lists L1, L2, L3 may also be provided in form of databases, tables, files or other structures, such as XML and/or JSON.

The vehicle 10 comprising a corresponding electronic control unit ecu provides the third aspect of the invention.

Another aspect of the invention may be a corresponding vehicle-to-cloud-system 100.

Also, a computer program product comprising a program code for carrying out a method as described above provides an aspect of the invention.

The above description of the figures describes the present invention only in the context of examples. Of course, individual features of the embodiments may be combined with each other, provided it is technically reasonable, without leaving the scope of the invention, if such combinations are encompassed within the scope of the invention as defined by dependent claims.

### Reference signs

- 100: vehicle-to-cloud-system

- 10: vehicle
- 11: vehicle devices
- 12: vehicle dashboard

- 20: backend device

- C: communication

- L1: first list
- L2: second list
- L3: third list

- D: data types
- D0: tracking data
- D1: location data
- D2: personal data
- D3: consent data
- D4: interest consideration data
- D5: anonymous data
- D6: dormant operation data

- P: privacy levels
- 0: low privacy level
- 1: privacy level
- 2: privacy level
- 3: privacy level
- 4: privacy level
- 5: privacy level
- 6: high privacy level

- S: privacy settings
- N: evaluable networks
- Q: connection quality

- ocu: online connectivity unit

- ecu: electronic control unit
- cu: computing unit
- mu: memory unit

- MOD: mobile online services
- r: request

## Claims

1. A method for controlling a communication (C) between a vehicle (10) and a backend device (20) in a vehicle-to-cloud-system (100), the method comprising:
- establishing a first list (L1) of mobile online services (MOD) used by vehicle devices (11) and corresponding data types (D) used by the mobile online services (MOD),
- establishing a second list (L2) of the data types (D) used by the mobile online services (MOD) and corresponding privacy levels (P) of the data types (D),
- receiving a request (r) from at least one of the mobile online services (MOD) to connect the backend device (20),
- verifying an authorization of the at least one of the mobile online services (MOD) to connect the backend device (20) upon the request (r), depending on:
- the privacy levels (P) corresponding to the data types (D) used by the at least one of the mobile online services (MOD) and
- current privacy settings (S) of the vehicle (10),
- connecting the at least one of the mobile online services (MOD) and the backend device (20), if the at least one of the mobile online services (MOD) is authorized to connect the backend device (20),
- wherein the at least one of the mobile online services (MOD) is authorized to connect the backend device (20), when it uses data types (D) corresponding to at least one privacy level (P) being higher than or equal to the current privacy settings (S) of the vehicle (10),
- and wherein, if the data types (D) used by the at least one of the mobile online services (MOD) requesting for a connection to the backend device (20) comprise dormant operation data (D6), the connection is allowed, even if the current privacy settings (S) of the vehicle (10) are set to a high level (6) of privacy, in order to allow a transmission of vital data between the vehicle (10) and the backend device (20).

2. The method according to claim 1,
**characterized in that**
if the current privacy settings (S) of the vehicle (10) are set to a high privacy level (6) and the data types (D) used by the at least one of the mobile online services (MOD) requesting for a connection to the backend device (20) comprise dormant operation data (D6), the method further comprises
- switching from a listening and/or dormant operation mode to a sending mode for a predetermined period of time to allow the at least one of the mobile online services (MOD) using dormant operation data (D6) to connect the backend device (20); and/or
- switching on a modem in a sending mode.

3. The method according to one of the preceding claims,
**characterized in that**
if the at least one of the mobile online services (MOD) uses different data types (D) according to the first list (L1), wherein different data types (D) are associated with various privacy levels (P) according to the second list (L2), the authorization to communicate between the at least one of the mobile online services (MOD) and backend device (20) is verified according to the highest privacy level (6) of the various privacy levels (P) corresponding to the different data types (D) used by the at least one of the mobile online services (MOD).

4. The method according to one of the preceding claims,
**characterized in that**
the method is executed by an online connectivity unit within the vehicle, and wherein the privacy levels (P) comprise at least two or more different privacy levels (0, 1, 2, 3, 4, 5, 6), between:
- a low privacy level (0), wherein at low privacy level (0) the online connectivity unit (ocu) is in a sending mode,
- and/or a high privacy level (6), wherein at high privacy level (6) the online connectivity unit (ocu) is in a listening and/or dormant operation mode.

5. The method according to one of the preceding claims,
**characterized in that**
the data types (D) comprise at least two or more different data types (D) comprising at least one of the following data types (D):
- tracking data (D0),
- location data (D1),
- personal data (D2),
- consent data (D3),
- interest consideration data (D4),
- anonymous data (D5),
- and/or dormant operation data (D6).

6. The method according to one of the preceding claims,
**characterized in that**
if the current privacy settings (S) of the vehicle (10) are set to a high privacy level (6) and/or if a listening and/or dormant operation mode is active, a third list (L3) of evaluable networks (N) will be established, wherein especially the third list (L3) of the evaluable networks (N) is analyzed by a connection quality (Q) of the evaluable networks (N).

7. The method according to one of the preceding claims,
**characterized in that**
establishing the first list and the second list is executed at least once after:
- a first commissioning of the vehicle (10),
- a technical inspection,
- a system update,
- a change of a user of the vehicle (10), and/or
- a user request.

8. The method according to one of the preceding claims,
**characterized in that**
verifying the authorization of the at least one of the mobile online services (MOD) and connecting the at least one of the mobile online services (MOD) are executed solely after receiving a request (r) from at least one of the mobile online services (MOD) to connect the backend device (20).

9. The method according to one of the preceding claims,
**characterized in that**
the method is solely executed,
- if the current privacy settings (S) of the vehicle (10) are set to a high privacy level (6); and/or
- if the online connectivity unit (ocu) is switched to a listening and/or dormant operation mode; and/or
- the communication (C) between a vehicle (10) and a backend device (20) is allowed for all mobile online services (MOD), if the current privacy settings (S) of the vehicle (10) are set to a low privacy level (0).

10. The method according to one of the preceding claims,
**characterized in that**
the privacy settings (S) of the vehicle (10) are determined manually by a user of the vehicle (10) especially by operating an input device of the vehicle (10), preferably a display device at a vehicle dashboard (12).

11. The method according to any one of the preceding claims,
**characterized in that**
the privacy settings (S) of the vehicle (10) are determined automatically by an electronic control unit (ecu) of the vehicle (10),
wherein especially a confirmation and/or adjustment possibility of the privacy settings (S) of the vehicle (10) automatically determined by an electronic control unit (ecu) of the vehicle (10) is provided for a user of the vehicle (10), especially by operating an input device of the vehicle (10), preferably a display device at a vehicle dashboard (12).

12. An electronic control unit (ecu) comprising:
a memory unit (mu), in which a program code is stored, and
a computing unit (cu), wherein when executing the program code by the computing unit (cu), a method according to one of the preceding claims is performed.

13. A vehicle (10) comprising an electronic control unit (ecu) according to the preceding claim.

14. A computer program product comprising instructions which, when the program is executed by a computer, cause the computer to carry out a method according to any one of claims 1 to 11.

## Patentansprüche

1. Verfahren zum Steuern einer Kommunikation (C) zwischen einem Fahrzeug (10) und einer Backend-Vorrichtung (20) in einem Fahrzeug-zu-Cloud-System (100), wobei das Verfahren Folgendes umfasst:
- Einrichten einer ersten Liste (L1) mobiler Online-Dienste (MOD), die durch Fahrzeugvorrichtungen (11) verwendet werden, und entsprechender Datentypen (D), die durch die mobilen Online-Dienste (MOD) verwendet werden,
- Einrichten einer zweiten Liste (L2) der Datentypen (D), die durch die mobilen Online-Dienste (MOD) verwendet werden, und entsprechender Datenschutzstufen (P) der Datentypen (D),
- Empfangen einer Anforderung (r) von mindestens einem der mobilen Online-Dienste (MOD), sich mit der Backend-Vorrichtung (20) zu verbinden,
- Überprüfen einer Autorisierung des mindestens einen der mobilen Online-Dienste (MOD), sich mit der Backend-Vorrichtung (20) zu verbinden, auf die Anforderung (r) hin abhängig von:
- den Datenschutzstufen (P), die den Datentypen (D) entsprechen, die durch den mindestens einen der mobilen Online-Dienste (MOD) verwendet werden, und
- aktuellen Datenschutzeinstellungen (S) des Fahrzeugs (10),
- Verbinden des mindestens einen der mobilen Online-Dienste (MOD) und der Backend-Vorrichtung (20), wenn der mindestens eine der mobilen Online-Dienste (MOD) autorisiert ist, sich mit der Backend-Vorrichtung (20) zu verbinden,
- wobei der mindestens eine der mobilen Online-Dienste (MOD) autorisiert ist, sich mit der Backend-Vorrichtung (20) zu verbinden, wenn er Datentypen (D) verwendet, die mindestens einer Datenschutzstufe (P) entsprechen, die höher als die oder gleich den aktuellen Datenschutzeinstellungen (S) des Fahrzeugs (10) ist,
- und wobei dann, wenn die Datentypen (D), die durch den mindestens einen der mobilen Online-Dienste (MOD), der eine Verbindung mit der Backend-Vorrichtung (20) anfordert, verwendet werden, Daten eines ruhenden Betriebs (D6) umfassen, die Verbindung selbst dann, wenn die aktuellen Datenschutzeinstellungen (S) des Fahrzeugs (10) auf eine höhere Datenschutzstufe (6) eingestellt sind, erlaubt wird, um eine Übertragung wesentlicher Daten zwischen dem Fahrzeug (10) und der Backend-Vorrichtung (20) zu erlauben.

2. Verfahren nach Anspruch 1,
**dadurch gekennzeichnet, dass**
dann, wenn die aktuellen Datenschutzeinstellungen (S) des Fahrzeugs (10) auf eine höhere Datenschutzstufe (6) eingestellt sind und die Datentypen (D), die durch den mindestens einen der mobilen Online-Dienste (MOD), der eine Verbindung mit der Backend-Vorrichtung (20) anfordert, verwendet werden, Daten eines ruhenden Betriebs (D6) umfassen, das Verfahren ferner Folgendes umfasst:
- Schalten von einer lauschenden und/oder ruhenden Betriebsart zu einer Sendebetriebsart für eine vorbestimmte Zeitperiode, um dem mindestens einen der mobilen Online-Dienste (MOD) zu erlauben, Daten eines ruhenden Betriebs (D6) zu verwenden, um sich mit der Backend-Vorrichtung (20) zu verbinden; und/oder
- Einschalten eines Modems in eine Sendebetriebsart.

3. Verfahren nach einem der vorhergehenden Ansprüche, **dadurch gekennzeichnet, dass**
dann, wenn der mindestens eine der mobilen Online-Dienste (MOD) verschiedene Datentypen (D) gemäß der ersten Liste (L1) verwendet, wobei verschiedene Datentypen (D) verschiedenen Datenschutzstufen (P) gemäß der zweiten Liste (L2) zugeordnet sind, die Autorisierung, zwischen dem mindestens einen der mobilen Online-Dienste (MOD) und der Backend-Vorrichtung (20) zu kommunizieren, gemäß der höchsten Datenschutzstufe (6) der verschiedenen Datenschutzstufen (P), die den verschiedenen Datentypen (D) entsprechen, die durch den mindestens einen der mobilen Online-Dienste (MOD) verwendet wird, überprüft wird.

4. Verfahren nach einem der vorhergehenden Ansprüche, **dadurch gekennzeichnet, dass**
das Verfahren durch eine Online-Verbindungseinheit innerhalb des Fahrzeugs ausgeführt wird, wobei die Datenschutzstufen (P) mindestens zwei oder mehr verschiedene Datenschutzstufen (0, 1, 2, 3, 4, 5, 6) umfassen zwischen:
- einer niedrigen Datenschutzstufe (0), wobei auf einer niedrigen Datenschutzstufe (0) die Online-Verbindungseinheit (ocu) in einer Sendebetriebsart ist,
- und/oder einer hohen Datenschutzstufe (6), wobei auf einer hohen Datenschutzstufe (6) die Online-Verbindungseinheit (ocu) in einer lauschenden und/oder ruhenden Betriebsart ist.

5. Verfahren nach einem der vorhergehenden Ansprüche, **dadurch gekennzeichnet, dass**
die Datentypen (D) mindestens zwei oder mehr verschiedene Datentypen (D) umfassen, die mindestens einen der folgenden Datentypen (D) umfassen:
- Verfolgungsdaten (D0),
- Standortdaten (D1),
- persönliche Daten (D2),
- Zustimmungsdaten (D3),
- Interessenberücksichtigungsdaten (D4),
- anonyme Daten (D5),
- und/oder Daten eines ruhenden Betriebs (D6).

6. Verfahren nach einem der vorhergehenden Ansprüche, **dadurch gekennzeichnet, dass**
dann, wenn die aktuellen Datenschutzeinstellungen (S) des Fahrzeugs (10) auf eine hohe Datenschutzstufe (6) eingestellt sind, und/oder dann, wenn eine lauschende und/oder ruhende Betriebsart aktiv ist, eine dritte Liste (L3) auswertbarer Netze (N) eingerichtet wird, wobei insbesondere die dritte Liste (L2) der auswertbaren Netze (N) durch eine Verbindungsqualität (Q) der auswertbaren Netze (N) analysiert wird.

7. Verfahren nach einem der vorhergehenden Ansprüche,
**dadurch gekennzeichnet, dass**
das Einrichten der ersten Liste und der zweiten Liste mindestens einmal ausgeführt wird nach:
- einer ersten Inbetriebnahme des Fahrzeugs (10),
- einer technischen Inspektion,
- einer Systemaktualisierung,
- einer Änderung eines Nutzers des Fahrzeugs (10) und/oder
- einer Nutzeranforderung.

8. Verfahren nach einem der vorhergehenden Ansprüche, **dadurch gekennzeichnet, dass**
das Überprüfen der Autorisierung des mindestens einen der mobilen Online-Dienste (MOD) und das Verbindung des mindestens einen der mobilen Online-Dienste (MOD) nur nach dem Empfangen einer Anforderung (r) von mindestens einem der mobilen Online-Dienste (MOD), sich mit der Backend-Vorrichtung (20) zu verbinden, ausgeführt wird.

9. Verfahren nach einem der vorhergehenden Ansprüche, **dadurch gekennzeichnet, dass**
das Verfahren nur ausgeführt wird,
- wenn die aktuellen Datenschutzeinstellungen (S) des Fahrzeugs (10) auf eine hohe Datenschutzeinstellung (6) eingestellt sind; und/oder
- wenn die Online-Verbindungseinheit (ocu) zu einer lauschenden und/oder ruhenden Betriebsart geschaltet wird; und/oder
- die Kommunikation (C) zwischen einem Fahrzeug (10) und einer Backend-Vorrichtung (20) für alle mobilen Online-Dienste (MOD) erlaubt ist, wenn die aktuellen Datenschutzeinstellungen (S) des Fahrzeugs (10) auf eine niedrige Datenschutzeinstellung (0) eingestellt sind.

10. Verfahren nach einem der vorhergehenden Ansprüche, **dadurch gekennzeichnet, dass**
die Datenschutzeinstellungen (S) des Fahrzeugs (10) manuell durch einen Anwender des Fahrzeugs (10) bestimmt werden, insbesondere durch Bedienen einer Eingabevorrichtung des Fahrzeugs (10), vorzugsweise einer Anzeigevorrichtung an einem Fahrzeugarmaturenbrett (12) .

11. Verfahren nach einem der vorhergehenden Ansprüche, **dadurch gekennzeichnet, dass**
die Datenschutzeinstellungen (S) des Fahrzeugs (10) automatisch durch eine elektronische Steuereinheit (ecu) des Fahrzeugs (10) bestimmt werden,
wobei insbesondere eine Bestätigung und/oder Anpassungsmöglichkeit der Datenschutzeinstellungen (S) des Fahrzeugs (10), die automatisch durch eine elektronische Steuereinheit (ecu) des Fahrzeugs (10) bestimmt werden, für einen Nutzer des Fahrzeugs (10), insbesondere durch Bedienen einer Eingabevorrichtung des Fahrzeugs (10), vorzugsweise einer Anzeigevorrichtung an einem Fahrzeugarmaturenbrett (12), bereitgestellt wird.

12. Elektronische Steuereinheit (ecu), die Folgendes umfasst:
eine Speichereinheit (mu), in der ein Programmcode gespeichert ist, und
eine Recheneinheit (cu), wobei dann, wenn der Programmcode durch die Recheneinheit (cu) ausgeführt wird, ein Verfahren nach einem der vorhergehenden Ansprüche ausgeführt wird.

13. Fahrzeug (10), das eine elektronische Steuereinheit (ecu) nach dem vorhergehenden Anspruch umfasst.

14. Computerprogrammprodukt, das Anweisungen umfasst, die dann, wenn das Programm durch einen Computer ausgeführt wird, bewirken, dass der Computer ein Verfahren nach einem der Ansprüche 1 bis 11 ausführt.

## Revendications

1. Procédé de contrôle d'une communication (C) entre un véhicule (10) et un dispositif dorsal (20) dans un système du véhicule au cloud (100), le procédé comprenant :
- l'établissement d'une première liste (L1) de services mobiles en ligne (MOD) utilisés par des dispositifs (11) du véhicule et de types de données (D) correspondants utilisés par les services mobiles en ligne (MOD),
- l'établissement d'une deuxième liste (L2) des types de données (D) utilisés par les services mobiles en ligne (MOD) et de niveaux de confidentialité (P) correspondants des types de données (D),
- la réception d'une demande (r) de connexion au dispositif dorsal (20) en provenance d'au moins un des services mobiles en ligne (MOD),
- la vérification d'une autorisation de l'au moins un des services mobiles en ligne (MOD) à se connecter au dispositif dorsal (20) lors de la demande (r), en fonction :
- des niveaux confidentialité (P) correspondant aux types de données (D) utilisés par l'au moins un des services mobiles en ligne (MOD) et
- de paramètres de confidentialité actuels (S) du véhicule (10),
- la connexion de l'au moins un des services mobiles en ligne (MOD) et du dispositif dorsal (20), si l'au moins un des services mobiles en ligne (MOD) est autorisé à se connecter au dispositif dorsal (20),
- l'au moins un des services mobiles en ligne (MOD) étant autorisé à se connecter au dispositif dorsal (20) lorsqu'il utilise des types de données (D) correspondant à au moins un niveau de confidentialité (P) qui est supérieur ou égal aux paramètres de confidentialité actuels (S) du véhicule (10),
- et, si les types de données (D) utilisés par l' au moins un des services mobiles en ligne (MOD) demandant une connexion au dispositif dorsal (20) comprennent des données de fonctionnement en veille (D6), la connexion étant permise, même si les paramètres de confidentialité actuels (S) du véhicule (10) sont définis à un niveau élevé de confidentialité (6), dans le but de permettre une transmission de données vitales entre le véhicule (10) et le dispositif dorsal (20).

2. Procédé selon la revendication 1,
**caractérisé en ce que**
si les paramètres de confidentialité actuels (S) du véhicule (10) sont définis à un niveau élevé de confidentialité (6) et que les types de données (D) utilisés par l'au moins un des services mobiles en ligne (MOD) demandant une connexion au dispositif dorsal (20) comprennent des données de fonctionnement en veille (D6), le procédé comprend en outre
- la commutation depuis un mode de fonctionnement en écoute et/ou en veille sur un mode d'envoi pendant un laps de temps prédéterminé pour permettre à l'au moins un des services mobiles en ligne (MOD) utilisant des données de fonctionnement en veille (D6) de se connecter au dispositif dorsal (20) ; et/ou
- la commutation sur un modem dans un mode d'envoi.

3. Procédé selon l'une des revendications précédentes, **caractérisé en ce que**
si l'au moins un des services mobiles en ligne (MOD) utilise des types de données (D) différents selon la première liste (L1), des types de données (D) différents étant associés à divers niveaux de confidentialité (P) selon la deuxième liste (L2), l'autorisation de communiquer entre l'au moins un des services mobiles en ligne (MOD) et le dispositif dorsal (20) est vérifiée selon le niveau le plus élevé de confidentialité (6) des divers niveaux de confidentialité (P) correspondant aux types de données (D) différents utilisés par l'au moins un des services mobiles en ligne (MOD).

4. Procédé selon l'une des revendications précédentes, **caractérisé en ce que**
le procédé est exécuté par une unité de connectivité en ligne à l'intérieur du véhicule, et le niveaux de confidentialité (P) comprennent au moins deux niveaux de confidentialité (0, 1, 2, 3, 4, 5, 6) différents ou plus, entre :
- un niveau bas de confidentialité (0) ; au niveau bas de confidentialité (0), l'unité de connectivité en ligne (ocu) se trouvant dans un mode d'envoi,
- et/ou un niveau élevé de confidentialité (6) ; au niveau élevé de confidentialité (6), l'unité de connectivité en ligne (ocu) se trouvant dans un mode de fonctionnement en écoute et/ou en veille.

5. Procédé selon l'une des revendications précédentes, **caractérisé en ce que**
les types de données (D) comprennent au moins deux types de données (D) différents ou plus comprenant au moins un des types de données (D) suivants :
- des données de traçage (D0),
- des données de localisation (D1),
- des données personnelles (D2),
- des données de consentement (D3),
- des données de prise en compte de l'intérêt (D4),
- des données anonymes (D5),
- et/ou des données de fonctionnement en veille (D6).

6. Procédé selon l'une des revendications précédentes, **caractérisé en ce que**
si les paramètres de confidentialité actuels (S) du véhicule (10) sont définis à un niveau élevé de confidentialité (6) et/ou si un mode de fonctionnement en écoute et/ou en veille est activé, une troisième liste (L3) de réseaux évaluables (N) sera établie, la troisième liste (L3) étant plus particulièrement analysée par une qualité de connexion (Q) des réseaux évaluables (N).

7. Procédé selon l'une des revendications précédentes, **caractérisé en ce que**
l'établissement de la première liste et de la deuxième liste est exécuté au moins une fois après :
- une première mise en service du véhicule (10),
- un contrôle technique,
- une mise à jour système,
- un changement d'un utilisateur du véhicule (10), et/ou
- une demande émanant d'un utilisateur.

8. Procédé selon l'une des revendications précédentes, **caractérisé en ce que**
la vérification de l'autorisation de l'au moins un des services mobiles en ligne (MOD) et la connexion de l'au moins un des services mobiles en ligne (MOD) sont exécutées uniquement après réception d'une demande (r) de connexion au dispositif dorsal (20) en provenance d'au moins un des services mobiles en ligne (MOD).

9. Procédé selon l'une des revendications précédentes, **caractérisé en ce que**
le procédé étant uniquement exécuté
- si les paramètres de confidentialité actuels (S) du véhicule (10) sont définis à un niveau élevé de confidentialité (6) ; et/ou
- si l'unité de connectivité en ligne (ocu) est commutée sur un mode de fonctionnement en écoute et/ou en veille ; et/ou
- la communication (C) entre un véhicule (10) et un dispositif dorsal (20) est permise pour tous les services mobiles en ligne (MOD), si les paramètres de confidentialité actuels (S) du véhicule (10) sont définis à un niveau bas de confidentialité (0).

10. Procédé selon l'une des revendications précédentes, **caractérisé en ce que**
les paramètres de confidentialité (S) du véhicule (10) sont déterminés manuellement par un utilisateur du véhicule (10) plus particulièrement par utilisation d'un dispositif d'entrée du véhicule (10), de préférence d'un dispositif d'affichage au niveau d'un tableau de bord (12) du véhicule.

11. Procédé selon l'une des revendications précédentes, **caractérisé en ce que**
les paramètres de confidentialité (S) du véhicule (10) sont déterminés automatiquement par une unité de commande électrique (ecu) du véhicule (10),
plus particulièrement une possibilité de confirmation et/ou de réglage des paramètres de confidentialité (S) du véhicule (10) déterminés automatiquement par une unité de commande électronique (ecu) du véhicule (10) étant offerte à un utilisateur du véhicule (10), plus particulièrement par utilisation d'un dispositif d'entrée du véhicule (10), de préférence d'un dispositif d'affichage au niveau d'un tableau de bord (12) du véhicule.

12. Unité de commande électronique (ecu), comprenant :
une unité de mémoire (mu), dans laquelle est stockée un code de programme, et
une unité de calcul (cu), l'exécution du code de programme par l'unité de calcul (cu) entraînant la réalisation d'un procédé selon l'une des revendications précédentes.

13. Véhicule (10), comprenant une unité de commande électronique (ecu) selon la revendication précédente.

14. Produit-programme d'ordinateur, comprenant des instructions qui, lorsque le programme est exécuté par un ordinateur, amènent l'ordinateur à mettre en œuvre un procédé selon l'une quelconque des revendications 1 à 11.
